# EUROPEAN PATENT APPLICATION

(11) **EP 0 921 327 A1**
(43) Date of publication of application: **09.06.1999**
(21) Application number: 98309870.8
(22) Date of filing: 02.12.1998
(51) Int. Cl.: F16C 1/12

(54) **Cable and other connection systems**

(30) Priority: 06.12.1997 GB 9725789
(71) Applicant: CTP Gills Cables Limited, Lichfield, Staffordshire WS14 9PP (GB)
(72) Inventor: Sadley, Eric Charles, Staffordshire, WS14 9NH (GB)
(74) Representative: Archer, Philip Bruce

(57) **Abstract**

A cable connection system provides a cable end connector (10) which can be snap-fitted to a swaged cable end stop (18) and to an actuating arm (14) of a carburettor or fuel injector. The connector (10) is in the form of a plastics moulding (20) formed with internal flexible arms (40,42) which define received and connected positions for the cable end stop (18) and the actuated arm (14). The connector (10) is a plastics moulding (20) which provides the flexibility of the resilient arms (40,42), but is subject to minimal dimensional change with time.

## Description

This invention relates to cable and other connection systems and provides a method and apparatus enabling the effective connection of a control cable to a mechanism or member to be actuated, or indeed could provide a corresponding connection at the actuating end of the cable where the cable is connected to actuating mechanisms such as a footpedal or other force-generating units. The invention may also be applicable to other situations where convenient and simple connecting means is needed between two mechanisms or members. The invention also provides a simple means for connecting a control cable to an end fitting therefor.

There is disclosed in our own prior European published application EP0251582A, a cable connection system provided with simple end connection means for connecting the throttle cable to the actuated carburettor or fuel injector, and likewise simple connection means at the footpedal actuating end of the cable, together with the disclosed and claimed system for setting the cable and the footpedal relative to the actuated member of the carburettor, so that full throttle is accurately reached at the end of, or slightly before the end of, the footpedal travel. We incorporate herein the entire disclosure of our above-mentioned European application by way of disclosure of a cable control system to which the present invention could be applied.

Typically, the connection system adopted previously has included connection means at the actuated end of the cable aimed at meeting the requirements for a relatively quick and easy mode of connection to be used by the operatives on the automotive vehicle assembly line so that the cable can be connected to the carburettor quickly and easily in a few seconds. Preferably also the connection system should permit relatively easy disconnection for servicing purposes. The previously proposed system has utilised, effectively, a resilient grommet component to provide the direct connection between the cable and the actuated member. The resilience of the grommet permits a generally snap-fit or (more accurately) a force-fit connection action (in which the actuated member is forced through a generally central hole in the grommet), but this connection system suffers from the defect that the natural or synthetic rubber ultimately degrades or perishes and this affects the throttle end position, which is not technically acceptable. Also, the initial force-fitting operation is not particularly satisfactory because the system requires a compromise between ease and rapidity of initial connection and lack of lost motion in the connected cable whereby the end result is some difficulty of fitting and too much slack in the cable when connected.

A state of the art search has revealed the following references:
US 4342273
GB 1375882
GB 0862268
GB 0771130

The US 273 reference discloses a line ender for use in coupling an end choker line to a hauling line in a log-hauling system in which the two lines are eventually coupled in-line by a connector but the system requires the application of substantial loads (as in a log-hauling system) and does not enable the connected position to be defined with ease and precision as required for a regulatory control cable situation.

The GB 882 reference discloses a connector for use in joining line in fishing tackle and is equally inapplicable to a control cable regulator system.

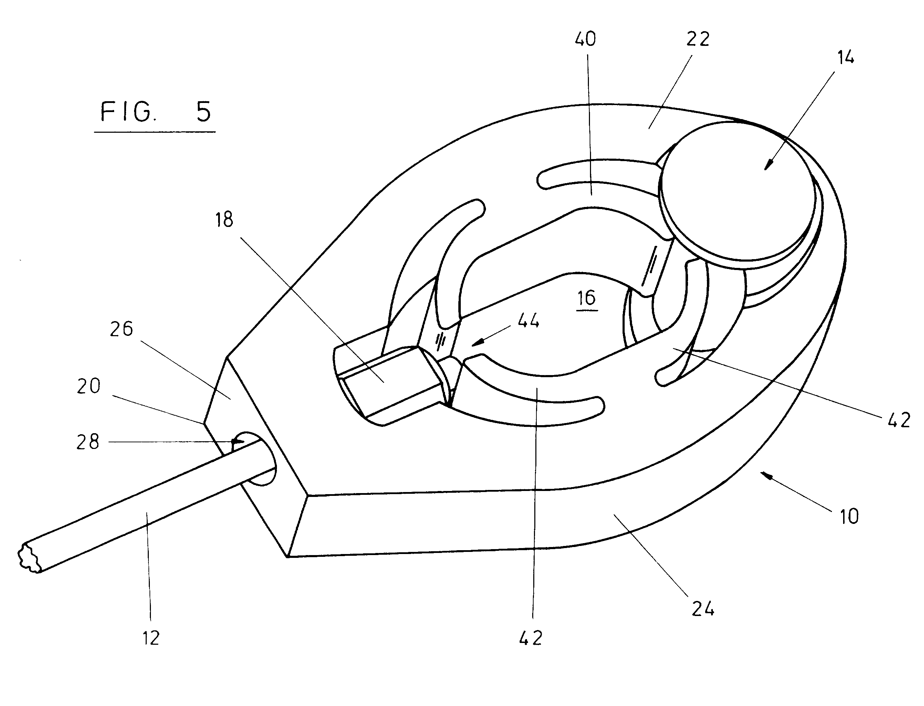

The GB 268 reference discloses a connector for use in a link mat and fig 4 shows a peened-over end fitting for connecting a cord to a fitting but which has little applicability to a system requiring connection and disconnection in a precise manner such as a regulatory control cable system

The GB 130 reference discloses a connector for a cord-operated electric ceiling switch.

Thus, we have identified a need for an improved system for connecting a control cable to its end fitting, whereby its connection operation and/or the parts and/or assembly time are reduced in cost and/or increased in efficiency.

Likewise, we have identified a need for a cable or other connection system which offers a better compromise between the factors discussed above and/or offers improvements generally in relation to systems connecting cables to mechanisms to be actuated thereby and/or to actuators therefor.

According to the invention there is provided a method and apparatus as defined in the accompanying claims.

In an embodiment, a cable connector provides a snap-action cable connect function. The snap-connect function enables connection by mere location of a connector with respect to the member to be connected, followed by application of a small load or force to the cable, whereupon it snaps or clicks into its connected position. A similar snap-connect function is provided in the embodiment for connecting the cable itself (through a swaged or otherwise fixed cable end) to a cable connector or end fitting.

In the embodiment, the connector provides structure defining a receptor into which the member to be connected is received. Resilient means is provided to fulfil two functions. Firstly, the resilient means allows the actuated member to move from its received position to its connected position by resilient flexure of the resilient means. Secondly, the resilient means or an associated structure defines the connected position of the actuated member such that only a defined degree of slack or lost motion is permitted in the connection between the cable and the actuated member.

In other words, in the embodiments, the connector permits snap-fit connection. Such connection is permitted by resilient means in the form of arms allowing relative movement between a received and a connected position, and the resilient means or other means defining the connected position with a defined degree of slack or lost motion, which may be effectively negligible for practical purposes.

In the embodiment, the resilient means comprises a pair of resilient arms formed, for example, as plastics mouldings within a generally closed or loop-format connector providing a receptor portion and a connected portion for the actuated member, the latter position being defined by the resilient arms. The resilient arms are located in relation to the receptor so as to define a clear and easily-manageable open receptor structure into which the member to be connected is inserted, and the arms also provide the means whereby the member to be connected, after reception, can be moved from its received position, against a yieldable resistance, to its connected position.

An embodiment of the invention will now be described by way of example with reference to the accompanying drawings in which:
Fig 1 shows a plan view of a cable connector;
Fig 2 shows the connector of Fig 1 connected to a control cable and with an actuating arm of a carburettor shown in a received position within the connector;
Fig 2A shows the actuating arm in side elevation view and Fig 2B shows it in end elevation view (as in Fig 2);
Fig 3 shows the actuating arm in its connected position;
Fig 4 shows the assembly of Fig 3 on a larger scale and with more detailed representation of the cable end fitting and of the actuating arm;
Fig 5 shows on a still larger scale a perspective view of the assembly of Fig 4; and
Figs 6 to 8 illustrate methods of assembly of the connector, the cable and the cable end stop.

As shown in the drawings, a cable connector 10 for connecting a throttle connecting cable 12 to the actuating arm 14 of a carburettor or fuel injector in an automotive vehicle, comprises structure defining a generally central receptor to receive actuating arm 14, and likewise to receive an end stop or fitting 18 swaged to cable 12. Arm 14 and end stop 18 both constitute force-transmitting means.

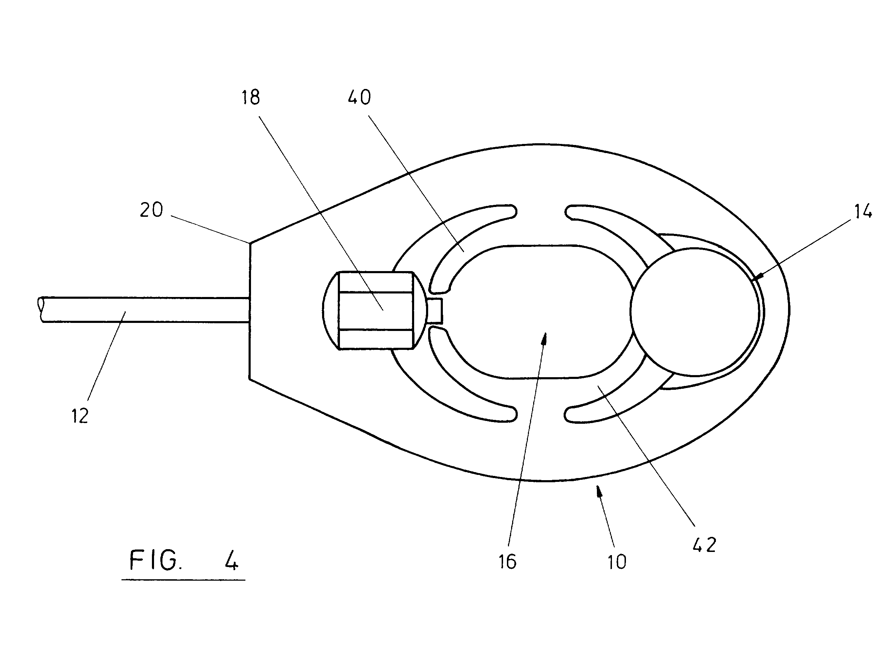

Broadly, the function of connector 10 is to interconnect cable 12 with actuating arm 14, and the connected condition of the assembly is shown in Figs 3, 4 and 5 in which the actuating arm 14 and the end stop 18 are in their connected positions, as will be more fully described below.

Cable connector 10 is in the form of a generally ovoid-profiled plastics moulding 20 having a generally constant thickness defined by side faces 22 and having a curved edge face 24 defining the ovoid profile, but formed with a flat end face 26 in which is an opening 28 to receive cable 12 so that cable end stop 18 abuts the corresponding inner face of moulding 20, and is captive.

Within plastics moulding 20 is formed an inner profile 30 of generally ovoid format but having end extensions 32,34 shaped to receive end stop 18 and actuating arm 14 respectively.

On opposite sides of profile 30, plastic moulding 20 is formed with opposed lands 36, 38 supporting a pair of general C shaped arms 40,42, constituting resilient retaining means for a purpose to be described.

The inner surfaces of arms 40,42 define receptor 16, which is of parallel-sided and round-ended format and located generally centrally of locator 10. Arms 40,42 are moulded integrally with the remainder of connector 10 in the plastics material thereof and thus are resilient and the end portions of arms 40,42 define gaps 44,46 through which end stop 18 and actuating arm 14 pass from their received to their connected positions.

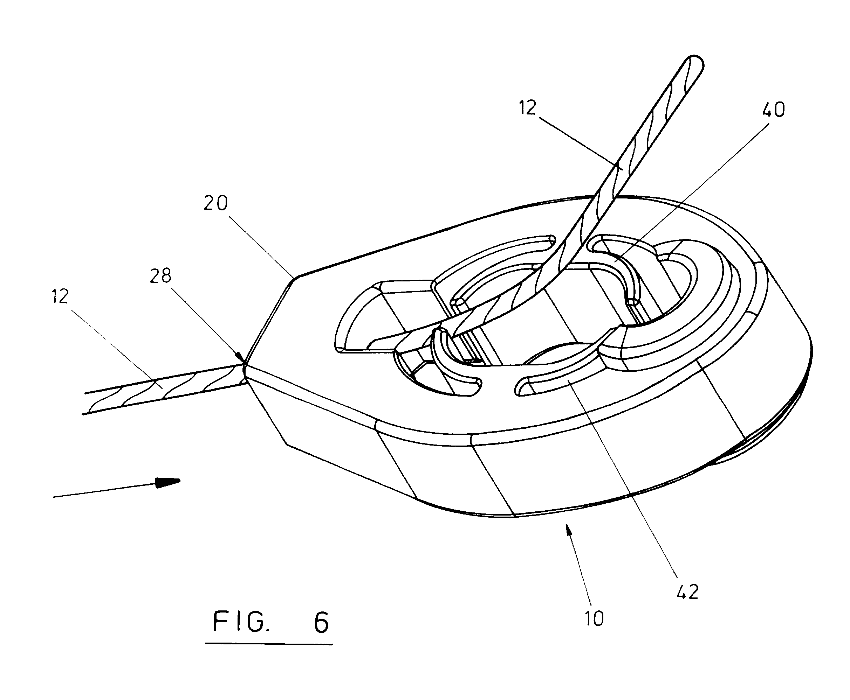

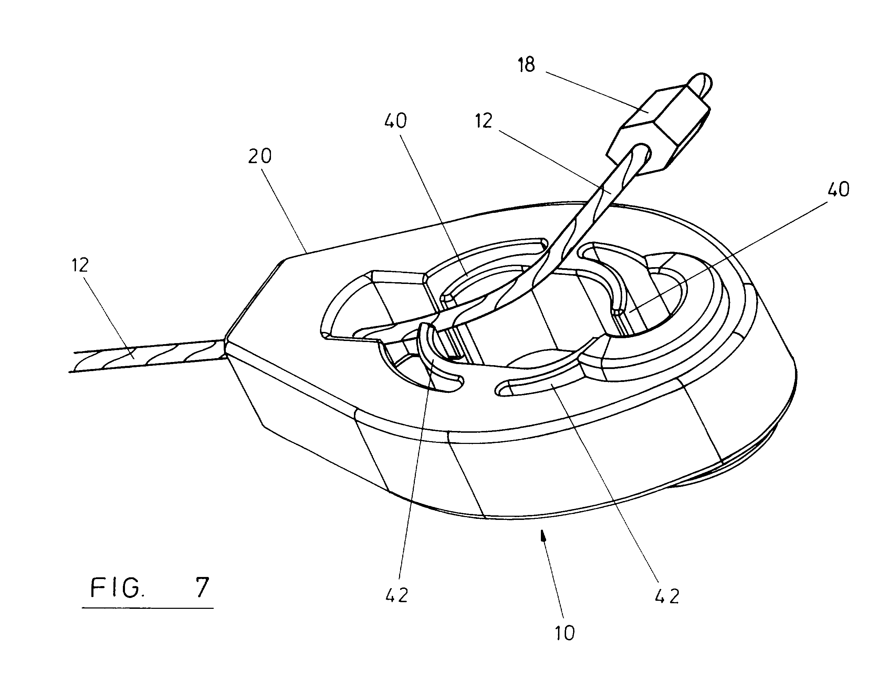

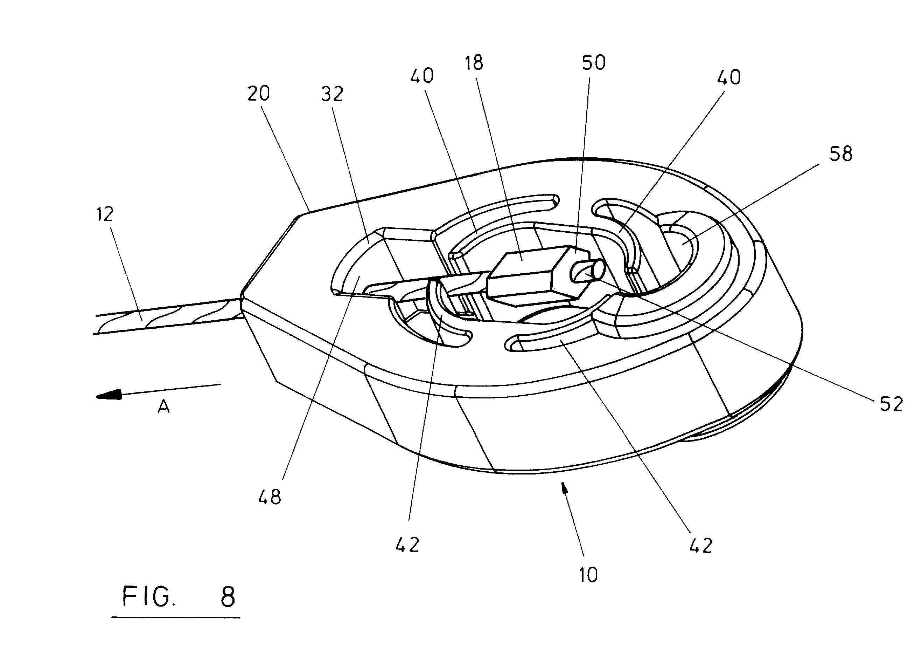

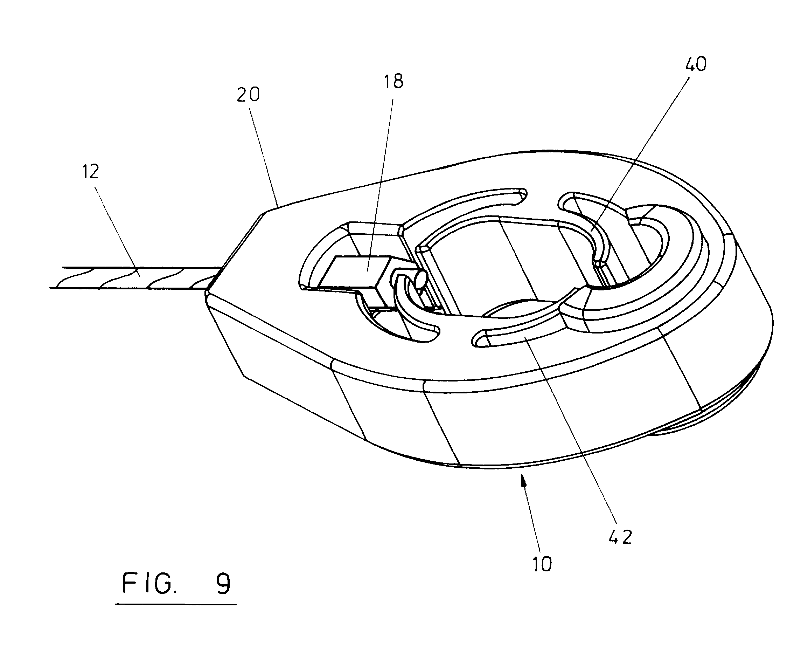

In use, the connector functions as follows. First, cable 12 is threaded through opening 28, as shown in Fig 6, without end stop 18 yet fixed to the cable. The cable end passes between the adjacent end portions of arms 40,42 and somewhat laterally as shown in Fig 6, to the position shown in Fig 7 whereupon end stop 18 is secured to the cable by swaging. As shown in Fig 8m cable 12 is then pulled outwardly in the direction of arrow A in Fig 8 so that end stop 18 passes between the adjacent ends of arms 40,42, and thus through gap 44 so as to enter extension 32 (of inner profile 30) where the end stop becomes captive between the end face 48 of extension 32 and the complementary end faces/edges of arms 40,42 which mutually contact the inner end face 50 of end stop 18, whereby the latter is captive with negligible lost motion and is effective to transmit to and from cable 12 the back-and-forth regulatory motion to be generated in actuating arm 14 during use of the carburettor or fuel injector system.

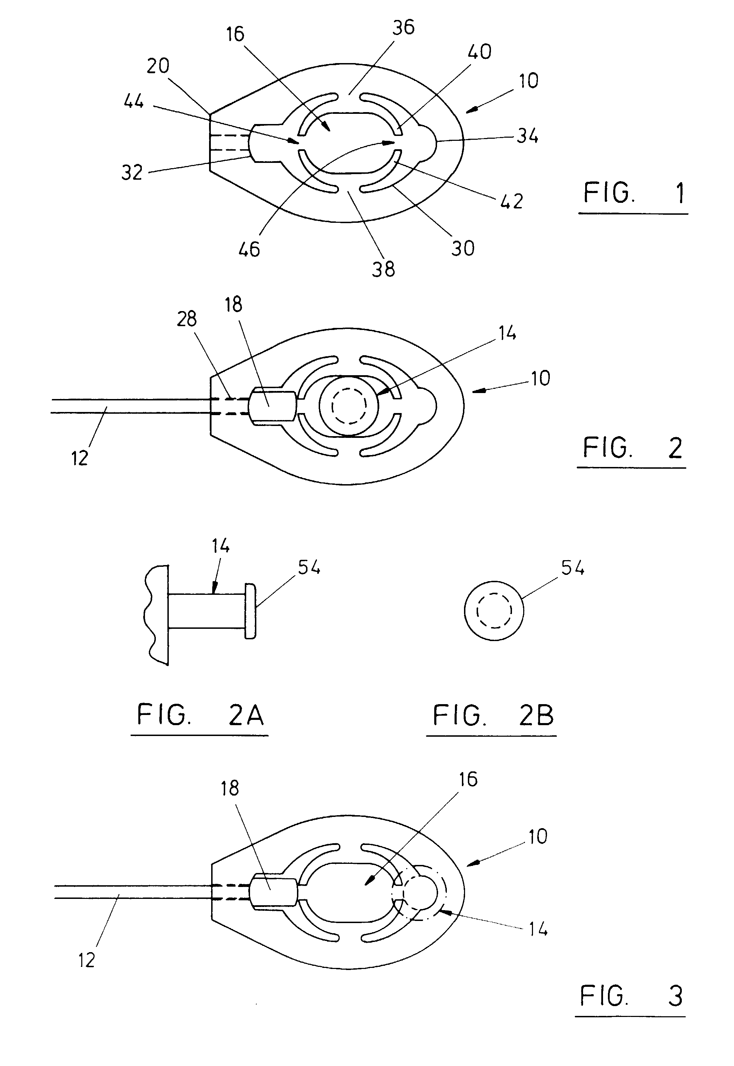

It will be seen that a short end portion 52 of cable 12 projects inwardly from end face 50 of end stop 18 and, in use, lodges between the confronting edge-faces of arms 40, 42 so as to locate end stop 18 in the radial direction with respect to cable 12. The installed position of end stop 18 is shown in Figs 2 to 5.

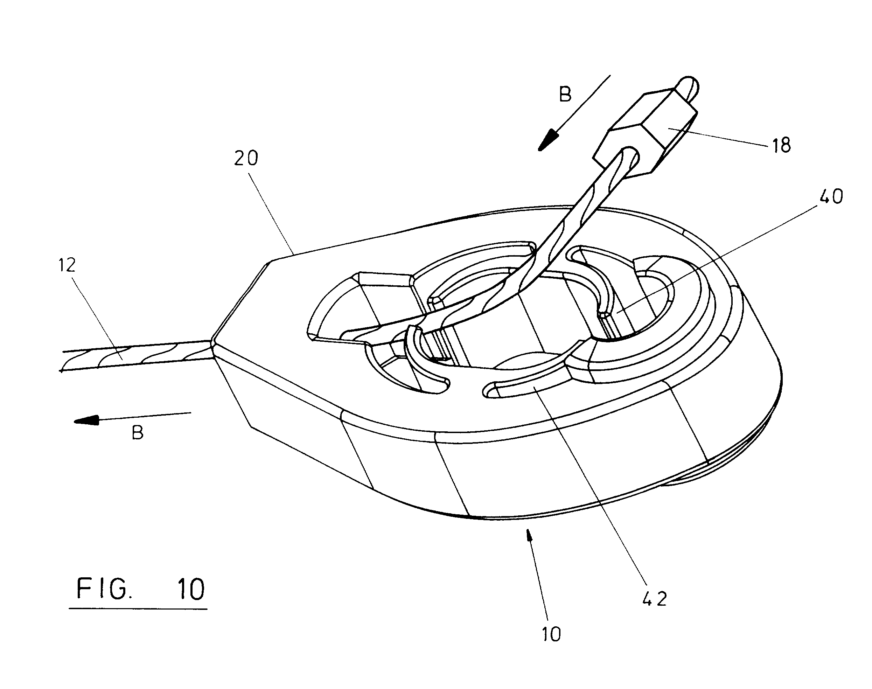

Turning now to the installation of actuating arm 14 in relation to connector 10, and the connection of same to cable 12, it will be noted from Fig 2A that actuating arm has a flat head 54 (shown in the embodiment of Figs 4 and 5 as a domed head), and has a generally cylindrical shank 56. For assembly purposes shank 56 is inserted into receptor 16 and snap fits though the gap 46 into its connected position shown in Figs 3, 4 and 5. As in the case of end stop 18, the shank 56 is located between the shaped internal end face 58 of moulding 20 and the corresponding edge/end faces of arms 40,42, with negligible lost motion or slack. Disconnection can be readily achieved by manual flexure of arms 40, 42 to permit actuating arm 14 and/or end stop 18 to pass through the thus-enlarged gaps 44 and 46. Otherwise, however the connector 10 provides a dimensionally precise connection between the actuating arm 14 and the end stop 18 of cable 12 which has significant practical advantages over previous systems, these including its ease of connection to both cable 12 and actuating arm 14, the relative rapidity of such connection, the dimensional stability of the connection when made, the absence of any appreciable lost motion, the simplicity of the construction of the connector and its relatively low cost as a plastics moulding, its thermal stability and indeed its stability to the effects of time and automotive operating conditions including the application of oils and like materials and solvents such as gasoline. A further advantage arises from the option illustrated in Fig 10 whereby the end stop 18 need not be swaged or otherwise fixed to the cable during the attachment process, but, maybe pre-attached and located with respect to connector 10 by a cable-insertion movement in the direction shown by arrows B in Fig 10, the cable then being attached at its other end to its corresponding actuating means (not shown).

Amongst other modifications which could be made in the above embodiment while remaining within the scope of the following claims are modifications to the shape and format of the arms 40,42 and of the end stop 18, and of the actuating arm 14 together with the corresponding portions of plastics moulding 20.

## Claims

1. A control cable connector for transmitting regulatory back-and-forth motion between a flexible control cable and a mechanism or member which actuates or is actuated by said cable, said connector comprising:
a) structure defining a receptor to receive at least one force-transmitting member;
b) said receptor being adapted to receive said force-transmitting member in a manner such that said force-transmitting member is both removable with respect to said receptor and connectable thereto to transmit forces to and from said receptor'
c) said adaptation of said receptor to receive said force transmitting member being such that said force transmitting member can move from a received position with respect of said receptor to a connected position with respect to said receptor and in said latter position said receptor can transmit said regulatory motion; and wherein
d) resilient retaining means is associated with said receptor and is adapted to permit said force transmitting member to move from said received position to said connected position with respect to said receptor with a snap action.

2. A connector according to claim 1 wherein said resilient retaining means comprises at least one flexible arm or leaf member posited between two portions of an opening in said receptor corresponding to said received and connected positions of said force-transmitting member.

3. A connector according to claim 2 wherein said flexible arm or leaf member comprises a pair of mutually inclined such members defining a passage therebetween through which said force transmitting member may pass with said snap action.

4. A connector according to claim 3 characterised by a second pair of said arm or leaf members spaced from the first such pair and permitting a second force transmitting member to be received by said receptor and to be moved to a corresponding connected position with a snap action.

5. A connector according to claim 4 wherein said receptor comprises a polymeric moulding with said arm or leaf members moulded therein.

6. A method of connecting a control cable to a mechanisms or member which actuates or is actuated by said cable, the method comprising providing a receptor to receive at least one force transmitting member of said cable or mechanism or member and causing said force transmitting member to move with respect to said receptor from a received position to a connected position with a snap-action.
